# EUROPÄISCHE PATENTSCHRIFT

(11) **EP 1 616 265 B1**
(45) Veröffentlichungstag und Bekanntmachung des Hinweises auf die Patenterteilung: **30.04.2008**
(21) Anmeldenummer: 04728549.9
(22) Anmeldetag: 21.04.2004
(51) Int. Cl.: G06F 13/42

(54) **VERFAHREN ZUM ADRESSIEREN VON MODULEN EINES BUSSYSTEMS**
METHOD FOR ADDRESSING MODULES OF A BUS SYSTEM
PROCEDE POUR ADRESSER DES MODULES D'UN SYSTEME DE BUS

(30) Priorität: 23.04.2003 DE 10318451
(43) Veröffentlichungstag der Anmeldung: 18.01.2006
(73) Patentinhaber: ENDRESS + HAUSER CONDUCTA GESELLSCHAFT FÜR MESS UND REGELTECHNIK mbH & Co., 70839 Gerlingen (DE); Endress+Hauser (Deutschland) AG+Co. KG, 79576 Weil am Rhein (DE)
(72) Erfinder: BEUEL, Stefan, 72141 Walddorf-Haslach (DE); GEHRKE, Martin, WEINSTEDT 71384 (DE); GROZINGER, Roland, 79219 Staufen (DE); MAIER, Stefan, 79618 Rheinfelden (DE)
(74) Vertreter: Andres, Angelika Maria
(86) Internationale Anmeldenummer: PCT/EP2004/004223
(87) Internationale Veröffentlichungsnummer: WO 2004/095300

(56) Entgegenhaltungen:
- EP-A- 0 265 905
- EP-A- 0 468 194
- US-A1- 2003 074 505
- "ADDRESSING SMART DEVICES BY INCREMENTING AND DECREMENTING THE ADDRESS IDENTIFIER" IBM TECHNICAL DISCLOSURE BULLETIN, IBM CORP. NEW YORK, US, Bd. 30, Nr. 7, 1. Dezember 1987 (1987-12-01), Seiten 179-180, XP000023932 ISSN: 0018-8689

## Beschreibung

Die Erfindung betrifft ein Verfahren zum Adressieren von Modulen eines Bussystems.

Bei Bussystemen erfolgt allgemein die Kommunikation zwischen den verschiedenen Modulen, die auch als Busteilnehmern bezeichnet werden, über einen gemeinsamen Übertragungsweg.
Ein bekanntes Beispiel für ein Bussystem aus dem Computerbereich ist der Prozessorbus, der in Rechnereinheiten Mikroprozessoren mit Arbeitsspeichern und verschiedenen Controllern verbindet. Ein Controller kann auch zur Verbindung mit anderen Bussysteme, an die Peripheriegeräte wie z.B. ein CD-ROM-Laufwerke angeschlossen sind, dienen. Beispiele für solche Peripheriebusse sind ISA, PCI, SCSI oder USB-Busse.

Im Bereich der Prozessautomatisierungstechnik werden ebenfalls Bussysteme eingesetzt, die als Feldbusse bezeichnet werden und Sensoren und Aktoren mit einem Leitsystem bzw. mit einer Steuereinheit zu verbinden.

Für den Datenaustausch zwischen den Teilnehmern eines Bussystems ist eine eindeutige Adressierung der Teilnehmer notwendig. Die Daten werden in Telegramme verpackt, die als digitale Bitfolge über den Bus übertragen werden. Der Aufbau der Telegramme ist in dem entsprechenden Busprotokoll festgelegt. In der Regel verlangt das Busprotokoll, dass die Quelladresse, d.h. die Adresse des Busteilnehmers von dem aus die Information gesendet wird und die Zieladresse, d.h. die Adresse des Busteilnehmers an den die Information gerichtet ist, im Telegramm enthalten ist. Die Adressen der Busteilnehmer sind somit notwendig um Informationen gezielt zu übertragen.

Bei der Adressierung unterscheidet man zwischen logischer und physikalischer Adressierung.

Bei der logischen Adressierung wird jedem Busteilnehmer unabhängig von seiner topologischen Position, d.h. seines Einbauorts im Bussystem, eine eindeutige logische Adresse zugewiesen, die vom Anwender in bestimmten Grenzen frei wählbar ist und in der Regel nach funktionalen Gesichtspunkten ausgewählt ist.
Bei einer logischen. Adressierung wird ein Teilnehmer somit ohne Kenntnis des Einbauorts bzw. seiner topologischen Position ausgewählt. Dem sendenden Teilnehmer muss die logische Adresse des Empfängers bekannt sein.

Einfache serielle Bussysteme verwenden in der Regel eine logische Adressierung. Die Adressierung eines Teilnehmers erfolgt durch die im Bustelegramm angegebene Zieladresse. Alle Busteilnehmer empfangen das gleiche Telegramm und müssen dessen Inhalt auswerten. Nur der Busteilnehmer mit der richtigen Zieladresse fühlt sich angesprochen und wertet das für ihn bestimmte Telegramm aus.

Da jeder Busteilnehmer eine eindeutige Adresse benötigt, muss diese entweder bei der Produktion des Teilnehmers oder dynamisch vom System vergeben werden und in einem Speicher des Teilnehmers abgespeichert werden. Ein dynamisches Verfahren zur Adressenvergabe in einem speziellen CAN-Bussystem (Controller Area Network), das in der Automobiltechnik weit verbreitet ist, ist aus der Patentschrift DE-PS 197 13 240 angemeldet auf die Fa. Endress+Hauser GmbH+ Co., offengelegt am 1.10.98, bekannt.
Ein weiter Möglichkeit der Adressenvergabe besteht darin, die Adresse des Busteilnehmers mit einem an seinem Gehäuse vorgesehenen DIP-Schalter einzustellen.

Ein Nachteil dieser Lösungen ist, dass alle Busteilnehmer den vollständigen Datenstrom , d. h. alle über den Bus übertragenen Telegramme, auswerten müssen. Dies bedeutet einen erhöhten Rechenaufwand. Weiterhin ist eine Bestimmung der topologischen Position des Teilnehmers über seine logische Adresse nicht möglich.

Insbesondere die DIP-Schalter-Lösung ist sehr aufwendig. Fehleinstellungen von Adressen durch das Bedienpersonal können nicht ausgeschlossen werden. Das Vergießen im Hinblick auf Ex-Sicherheit von Schaltungen mit DIP-Schaltem ist nicht möglich, da diese frei zugänglich sein müssen.
DIP-Schalter sind darüber hinaus teuer, fehleranfällig und können in der Fertigung Probleme bereiten.

Komplexe serielle Bussysteme und parallele Bussysteme, vor allem Bussysteme die nach dem sogenannten Master-Slave-Verfahren arbeiten, verwenden physikalische Adressen, die sich aus der jeweiligen topologischen Position des Busteilnehmers ergeben. Die Adressierung der Busteilnehmer erfolgt über ein Select-Signal (CS-Chip Select) oder über eine selbständige Ermittlung der physikalischen Adresse durch den Teilnehmer selbst mittels einer entsprechenden Steckplatzcodierung.
Ein Vorteil der Adressierungsart über das Select-Signal besteht darin, dass der Busteilnehmer aus dem Datenstrom nur die für ihn bestimmten Daten auswertet. Nachteilig jedoch ist, dass ein zusätzlicher Verkabelungsaufwand zur Übertragung des Select-Signals notwendig ist.

In der Regel sind Steckplatzsysteme teuer und sie weisen meist nur eine geringe begrenzte Anzahl von Steckplätzen auf. Eine Erweiterung der vorhandenen Steckplätze ist nicht ohne weiteres möglich. Ein weiterer Nachteil bei Steckplatzsystemen ist, dass sie auf ein zentrales Verteilersystem (Router) angewiesen sind.

Derartige Systeme benötigen einen erhöhten Aufwand für die Codierung sowie die Adressierung der Busteilnehmer. Bei allen bekannten Adressierungsverfahren außer bei dem Select-Signal-Verfahren muss der Teilnehmer seine Busadresse in irgendeiner Form kennen bzw. sie muss ihm bekannt gemacht werden.

Moderne modulare Systeme insbesondere in der Prozessautomatisierungstechnik bestehen in der Regel aus mehreren separat arbeitenden Teilsystemen, die als Teilnehmer eines Bussystems organisiert sind. Die oben genannten Adressierungsarten führen alle zu erhöhten Kosten bei der Herstellung der Busteilnehmer und/oder der entsprechenden Steckplatzsysteme.

Aus dem Dokument EP0468194 ist eine Vorrichtung zum Adressieren von Modulen bekannt, die jedoch relativ langsam ist.

Aufgabe der Erfindung ist es deshalb eine Vorrichtung zum Adressieren von Modulen die über ein Bussystem miteinander verbunden sind anzugeben, die die oben genannten Nachteile nicht aufweist, die eine Adressierung des Teilnehmers über seine Position erlaubt und eine lokale Erkennung des Adressaten ermöglicht ohne dass die Adresse beim Teilnehmer abgespeichert wird, die einfach um neue Teilnehmer erweiterbar ist und die einfach und kostengünstig ist.

Gelöst wird diese Aufgabe durch die in Anspruch 1 angegebene Vorrichtung.

Vorteilhafte Weiterentwicklung der Erfindung sind in den Unteransprüchen angegeben.

Die Vorrichtung lässt sich einfach
und kostengünstig realisieren. Die Adressen der Teilnehmer müssen nicht vorab vergeben werden bzw. über eine Steckplatzcodierung an die Teilnehmer übertragen werden. Das Bussystem kann einfach um neue Teilnehmer (Module) erweitert werden.
Es ermöglicht eine lokale d. h. im Modul selbst stattfindende Erkennung ob die über das Bussystem übertragenen Daten für das jeweilige Modul bestimmt sind oder nicht. Damit ist eine lokale Erkennung des Adressaten möglich.

Die Erfindung ist vor allem im Bereich der Prozessautomatisierungstechnik als Messumformer einsetzbar. Hierbei sind die Module mit Sensoren bzw. mit Aktoren z. B. PH-Sensoren, Leitfähigkeitssensoren, Relais, etc. verbunden. Das vom Mastermodul (Mikroprozessor) adressierte bzw. ausgewählte Modul kann seine Messwerte über den Datenkanal zum Mikroprozessor senden.

In vorteilhafter Weise ist der im Messumformer vorgesehene Mikroprozessor mit einem Feldbus der Prozessautomatisierungstechnik (HART®, Profibus®, Foundation® Fielbus, etc. ) verbunden. Dadurch können übergeordnete Einheiten (Leitsysteme, Steuereinheiten) auf die Sensoren bzw. Aktoren zugreifen.

In einfacher Weise sind die Module stapelweise steckbar ausgebildet und jeweils benachbarte Module sind über Adresseingang bzw. Adressausgang miteinander verbunden.

Nachfolgend ist die Erfindung anhand eines in der Zeichnung dargestellten Ausführungsbeispiels näher erläutert.

Es zeigen:
- Fig. 1: mehrere Module eines Bussystems in schematischer Darstellung;
- Fig. 2: ein Modul gemäß Fig. 1 in vergrößerter schematischer Darstellung ;
- Fig. 3: Messumformer für die Prozessautomatisierungstechnik in schematischer Darstellung;
- Fig. 4: mehrere Module eines Bussystems in schematischer Darstellung gemäß einer weiteren Ausgestaltung der Erfindung.

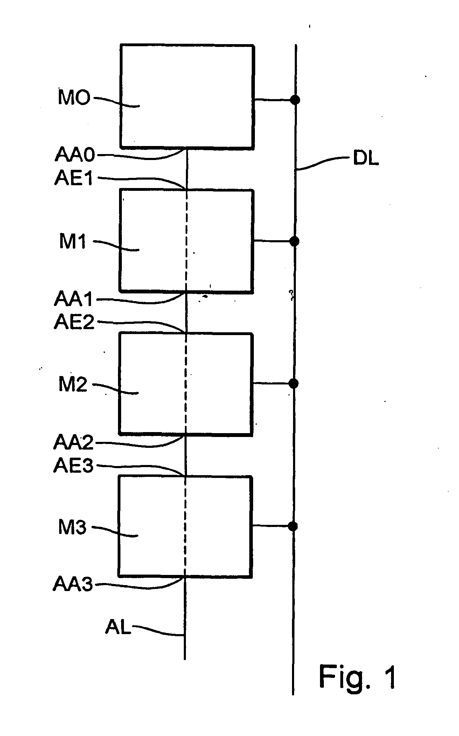

Fig. 1 zeigt mehrere Module M0, M1, M2, M3 die über ein Bussystem bestehend aus einer Adressleitung AL und einer Datenleitung DL verbunden sind. Jedes Modul M0, M1, M2, M3 weist einen Adressausgang AA0, AA1, AA2, AA3 und einen Adresseingang AE0, AE1, AE2, AE3 auf. Über die Datenleitung DL werden die Daten, über die Adressleitung AL die Adresswerte übertragen.

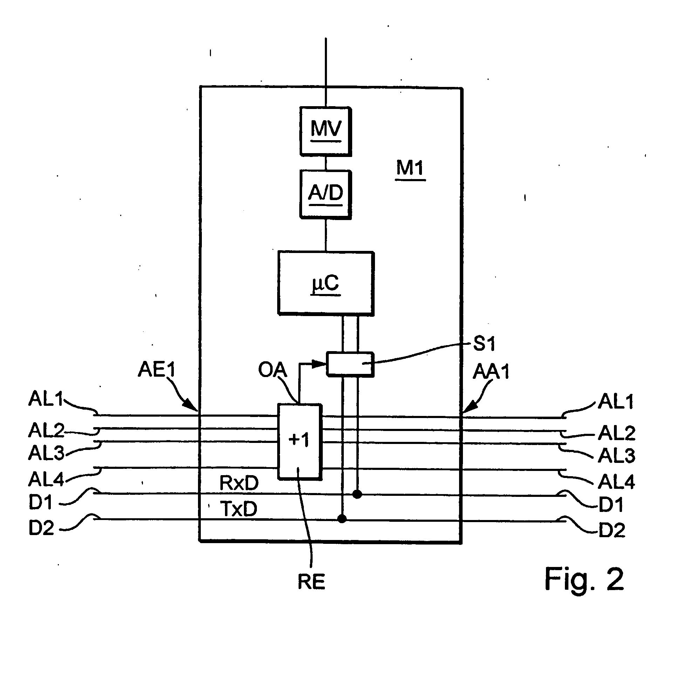

In Fig. 2 ist ein Modul z. B. das Modul M1 näher dargestellt. Das Modul M1 weist als arithmetische/logische Recheneinheit RE einen 4-Bit-Addierer auf. Die in Fig. 1 dargestellte Adressleitung AL besteht aus 4 separaten Adressleitungen AL1, AL2, AL3, AL4, die über den Adresseingang AE1 des Moduls M1 mit der als 4-Bit-Addierer ausgebildeten Recheneinheit RE verbunden sind. Die Recheneinheit RE weist 4 Ausgänge auf, die über den Adressausgang AA1 mit den 4 Leitungen AL1, AL2, AL3, AL4 der Adressleitung AL verbunden sind. Über einen Schalter S1 ist ein Mikrocontroller µC mit der aus zwei Einzelleitungen einer RxD-Leitung D1 und einer TxD-Leitung D2 bestehenden Datenleitung DL verbunden. Über einen Messverstärker MV und einen A/D-Wandler AD ist ein nicht näher dargestellter Sensor mit dem Mikrocontroller µC verbunden.
Der Schalter S1 ist mit dem Overflow-Ausgang OA der Recheneinheit RE verbunden und wird über das Overflow-Signal, das als CS(Chip Select)-Signal dient, von der Recheneinheit RE angesteuert.

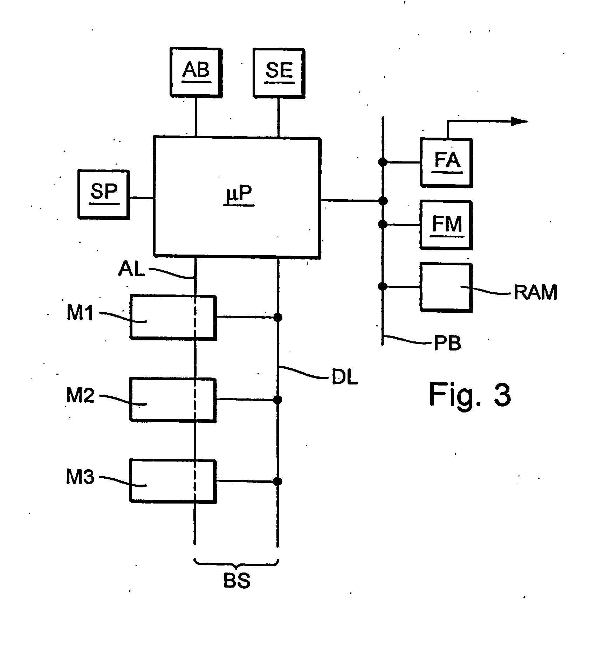

Fig. 3 zeigt einen Messumformer der Prozessautomatisierungstechnik in schematischer Darstellung. Ein Mikroprozessor µP ist mit einer Anzeigebedieneinheit AB, die als LCD-Display mit mehreren Tasten ausgebildet ist, verbunden. Ein EEPROM Speicher SP dient als Programm- und Datenspeicher. Über einen Prozessorbus PB ist der Mikroprozessor µP mit einer Feldbusanschaltung FA, einem Flash-Memory FM und einem Arbeitsspeicher RAM verbunden.

Über eine Serviceschnittstelle SE, die ebenfalls mit dem Mikroprozessor µP verbunden ist, kann ein Servicegerät (z.B. Laptop), auf dem ein Bedienprogramm installiert ist, angeschlossen werden.

Weiterhin ist der Mikroprozessor µP mit der Adressleitung AL und der Datenleitung DL, die zusammen die Kommunikationsverbindung des Bussystem BS bilden, verbunden. Der Mikroprozessor µP entspricht dem Modul M0 von Fig. 1.
Das Bussystem BS besteht noch aus den weiteren Modulen M1, M2, M3.

Nachfolgend ist das erfindungsgemäße Verfahren für ein Bussystem mit 4 Adressleitungen und jeweils einem 4-Bit-Addierer in den einzelnen Modulen näher erläutert.

Der Mikroprozessor µP erzeugt zur Adressierung eines speziellen Moduls M4 einen bestimmten Adresswert AW=12 und legt diesen auf die Adressleitung AL. Dieser Adresswert AW wird im Modul M1 um 1 erhöht und an das Modul M2 weitergegeben. Im Modul 2 wird der erhöhte Adresswert AW + 1 wiederum um 1 erhöht und an das Modul M3 weitergegeben. Jedes weitere an das Bussystem BS angeschlossene Modul Mi erhöht den vom vorhergehenden Modul Mi-1 empfangenen Adresswert ebenfalls um 1. Am Modul M4 tritt ein Overflow des Addierers auf und die Recheneinheit RE dieses Moduls erzeugt ein Overflow-Signal, gleichzeitig wird der Adresswert auf den Wert AW=O zurückgesetzt. Durch das Overflow-Signal, das als CS-Signal dient, wird der Schalter S1 geschlossen und der Mikrocontroller C ist mit den Leitungen D1 bzw. D2 verbunden. Das betreffende Modul M4 ist adressiert bzw. ausgewählt. Die über die Datenleitung DL übertragenden Daten sind nur für dieses Modul M4 bestimmt und werden nur in diesem Modul ausgewertet. Das dem Modul Mi nachgeschaltete Modul Mi+1 sieht an seinem Adresseingang AEI+1 die kleinste darstellbare Adresse, Adresswert AW=0. Da bei keinem der weiteren Module Mi ein Overflow auftritt, ist genau ein Modul, das Modul M4, adressiert. In keinem der weiteren Module M findet eine Auswertung der über den Bus übertragenen Daten statt.

Mit einem 4-Bit-Adierer können bis zu 16 Module eindeutig adressiert werden. Sollen mehr Module adressiert werden so sind mehr Adressleitungen und entsprechende der Anzahl der Adressleitungen angepasste Addierer notwendig.

Das erfindungsgemäße Verfahren ist besonders geeignet für Messumformer in der Prozessautomatisierungstechnik, wobei die Module mit Sensoren bzw. Aktoren z. B. pH-Sensoren, Leitfähigkeitssensoren, Relais verbunden sind. Über die Feldbusanschaltung FA ist der Messumformer mit einem übergeordneten Feldbus (z.B. Profibus® PA, Foundation® Fieldbus, HART®) verbunden.

Messwerte die von den an die Module M angeschlossenen Sensoren geliefert werden, können so über einen Feldbus an ein Leitsystem oder einer Steuereinheit weitergeleitet werden.

Die Module M1, M2, M3, M4 sind stapelbar ausgebildet, so dass jeweils ein Adresseingang mit einem Adressausgang verbunden ist.

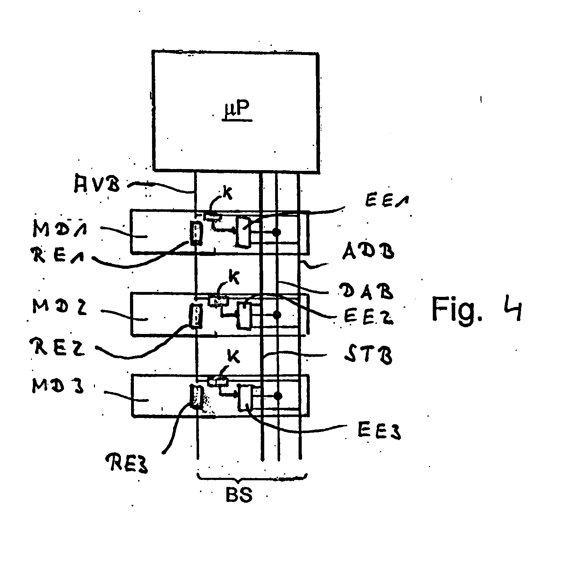

Fig. 4 zeigt eine alternative Ausgestaltung der Erfindung.
Ein Mikroprozessor µP ist über einen Adressbus ADB mit Adressleitungen (16x) AL, einen Datenbus DAB mit Datenleitungen (8x) DL sowie einen Steuerbus STB mit Steuerleitungen (2x) SL mit mehreren Modulen MD1, MD2, .... verbunden. Diese drei Leitungsbündel werden zu jedem der Module MD1, MD2 geführt.

Weiterhin ist der Mikroprozessor µP über Adressvorgabebus AVB mit Adressvorgabeleitungen (4x) AVL ebenfalls mit den Modulen MD1, MD2, .... verbunden. In jedem der Module MD1, MD2 ist eine Rechnereinheit RE vorgesehen, die in die Adressvorgabeleitungen AVL zwischengeschaltet ist.
In jedem Modul MD1, MD2, .... ist ein Komparators K vorgesehen, der mit den Adressvorgabeleitungen AVL und den Adressleitungen AL verbunden ist. Der CS (Chip Select) Ausgang des Komparators ist jeweils mit einer Elektronikeinheit EE1 verbunden. Jede der Elektronikeinheiten EE1 ist ebenfalls mit den Adressleitungen AL, Datenleitungen DL und Steuerleitungen SL verbunden. Die Module MD1, MD2, .... und der Mikroprozessor µP können auch direkt über Steckverbindungen miteinander verbunden sein. In diesem Fall entfallen die Leitungsabschnitte zwischen den einzelnen Modulen.

Nachfolgend ist die Funktionsweise dieses Ausführungsbeispiels näher erläutert. Im Mikroprozessor µP, der das Mastermodul darstellt, wird ein Starwert vorgegeben. Dieser Startwert wird in jedem der Module MD1, MD2,.. mittels der jeweiligen Recheneinheit RE1, RE2 in einen neuen Adressbereichswert geändert. Jede Recheneinheit RE addiert dabei einen Wert zum Adressbereichswert, der dem Adressraum der entsprechenden Elektronikeinheit EE1, EE2 entspricht.
Über die Adressleitung AL wird ein fester Adresswert vom Mikroprozessor µP an die einzelnen Module MD1, MD2 ..übergeben. Im Komparator K (z.B. 4-Bit) jedes Moduls wird der an der Adressleitung AL anliegende Adresswert mit dem an der Adressvorgabeleitung AVL anliegenden Adressbereichswert verglichen und falls der Adresswert in den durch den Adressbereichswert abgedeckten Adressbereich fällt, ist genau dieses Modul adressiert.
Verglichen werden hierzu der Adressbereichswert und die höherwertigen Bits des Adresswertes
Hierzu erzeugt der entsprechende Komparator ein Chip Select Signal an einem Chip Select Ausgang CS das an die Elektronikeinheit z. B. EE2 weitergegeben wird. Die Elektronikeinheit EE2 kann dann Daten über die Datenleitung DL senden oder empfangen, je nach dem welches Signal an den Steuerleitungen SL anliegt. Auch dieses Ausführungsbeispiel erlaubt in einfacher Weise ein Adressieren von Modulen, wobei die Anzahl der Module im Prinzip beliebig erweiterbar ist.
Diese Ausgestaltung der Erfindung lässt sich z. B. bei Feldgeräten einsetzen, die um Module erweiterbar sein sollen. Beispielsweise Ultraschallmessgeräte, die um einen zusätzlichen Ultraschallsensor erweiterbar sind. Die Sensormodule werden dann einfach mit einer Grundeinheit, die aus einem Netzteil und einer Auswerteeinheit besteht verbunden. Als Erweiterungsmodule sind auch weiter Busanschaltungen (Profibus, Foundation Fieldbus oder HART) bzw. Speichereinheiten (Datenlogger) etc. denkbar.

## Patentansprüche

1. Vorrichtung zum Adressieren von Modulen, mit einem Mastermodul mit einem Mikroprozessor (µP) und mehreren Modulen (MD1, MD2), die über ein Bussystem, bestehend aus einem Datenbus, einem Adressbus und einem Steuerbus miteinander verbunden sind, **dadurch gekennzeichnet, dass** der Mikroprozessor (µP) über einen Adressvorgabebus (AVB) mit den Modulen (MD1, MD2) verbunden ist, wobei in jedem Modul eine Rechnereinheit (RE) vorgesehen ist, die in den Adressvorgabeleitungen (AVL) des Adressvorgabebusses (AVB) zwischengeschaltet ist, wobei in jedem Modul ein Komparator (K) vorgesehen ist, der mit den Adressvorgabeleitungen (AVL) und den Adressleitungen (AL) des Adressbusses (ADB) verbunden ist, wobei ein vom Mikroprozessor (µP) vorgegebener Startwert von Modul zu Modul über den Adressvorgabebus (AVB) weitergegeben wird, der bei jeder Weitergabe in der jedem Modul (MD1, MD2) zugeordneten arithmetischen/logischen Rechnereinheit (RE1, RE2) in einen neuen Adressbereichswert geändert wird, so dass jedem Modul ein bestimmter Adressbereichswert zugeordnet ist, wobei im Komparator (K) jedes Moduls der an den Adressleitungen (AL) anliegende Adresswert mit dem an den Adressvorgabeleitungen (AVL) anliegenden Adressbereichswert verglichen wird und falls der Adresswert in den durch den Adressbereichswert abgedeckten Adressbereich fällt, dieses Modul adressiert ist, wobei hierzu der Adressbereichswert und die höherwertigen Bits des Adresswertes verglichen werden.

2. Vorrichtung nach Anspruch 1, **dadurch gekennzeichnet, dass** die Module mit Sensoren bzw. Aktoren, z.B. ph-Sensoren, Leitfähigkeitssensoren, Relais etc. verbunden sind.

3. Vorrichtung nach einem der vorhergehenden Ansprüche, **dadurch gekennzeichnet, dass** das Mastermodul mit einem Feldbus (z.B. HART®, Profibus®, Foundation® Fieldbus®) der Prozessautomatisierungstechnik verbunden ist.

4. Vorrichtung nach einem der vorhergehenden Ansprüche, **dadurch gekennzeichnet, dass** die Module stapelweise steckbar sind und bei benachbarten Modulen Adresseingang mit Adressausgang miteinander verbunden sind.

5. Vorrichtung nach einem der vorhergehenden Ansprüche **dadurch gekennzeichnet, dass** die Vorrichtung als Messumformer in der Prozessautomatisierungstechnik dient.

## Claims

1. Instrument for addressing modules, with a master module with a microprocessor (µP) and several modules (MD1, MD2), which are connected via a bus system - consisting of a data bus, an address bus and a control bus - **characterized in that** the microprocessor (µP) is connected to the modules (MD1, MD2) via an address specification bus (AVB), whereby each module is provided with a computing unit (RE) which is interconnected in the address specification cables (AVL) of the address specification bus (AVB), whereby a comparator (K) - which is connected to the address specification cables (AVL) and the address cables (AL) of the address bus - is provided in each module and whereby a start value specified by the microprocessor (µP) is transmitted from module to module via the address specification bus (AVB) and this value is changed to a new address range value each time the value is passed on in the arithmetic/logic computing unit (RE1, RE2) assigned to each module (MD1, MD2) in such a way that each module is assigned a specific address range value, whereby in the comparator (K) of each module, the address value present at the address cables (AL) is compared to the address range value present at the address specification cables (AVL), and if the address value falls into the address range covered by the address range value, this module is addressed whereby the address range value and the higher-value bits of the address value are compared for this purpose.

2. Instrument as per Claim 1, **characterized in that** the modules are connected to sensors or actuators, e.g. pH sensors, conductivity sensors, relays etc.

3. Instrument as per one of the previous Claims, **characterized in that** the master module is connected to a field bus (e.g. HART®, Profibus®, Foundation® Fieldbus®) of process automation technology.

4. Instrument as per one of the previous Claims, **characterized in that** the modules can be connected in batches and, in the case of neighboring modules, the address input is connected to the address output.

5. Instrument as per one of the previous Claims, **characterized in that** the instrument acts as a transmitter in process automation technology.

## Revendications

1. Dispositif destiné à l'adressage de modules, avec un module maître doté d'un microprocesseur (µP) et de plusieurs modules (MD1, MD2), qui sont reliés entre eux par l'intermédiaire d'un système de bus, constitué d'un bus de données, d'un bus d'adresse et d'un bus de contrôle, **caractérisé en que** le microprocesseur (µP) est relié aux modules (MD1, MD2) par l'intermédiaire d'un bus de spécification d'adresse (AVB), dans chaque module étant prévu une unité de calcul (RE), qui est insérée dans les lignes de spécification d'adresse (AVL) du bus de spécification d'adresse (AVB), dans chaque module étant prévu un comparateur (K), lequel est relié avec les lignes de spécification d'adresse (AVL) et les lignes d'adresse (AL) du bus d'adresse (ADB), une valeur initiale étant transmise de module en module par le microprocesseur (µP) par l'intermédiaire du bus de spécification d'adresse (AVB), laquelle valeur est modifiée en une nouvelle valeur de plage d'adresses à chaque transmission dans l'unité de calcul (RE1, RE2) arithmétique /logique attribuée à chaque module (MD1, MD2), de telle manière qu'est attribuée à chaque module une valeur de plage d'adresses déterminée, dans le comparateur (L) de chaque module étant comparée la valeur d'adresse présente sur les lignes d'adresse (AL) avec la valeur de plage d'adresses présente sur les lignes de spécification d'adresse (AVL) et, au cas où la valeur d'adresse tombe dans la plage d'adresses couverte par la valeur de plage d'adresses, ce module est adressé, la valeur de plage d'adresses et les bits de poids supérieur de la valeur d'adresse étant comparés à cette fin.

2. Dispositif selon la revendication 1, **caractérisé en ce que** les modules sont reliés à des capteurs, actionneurs, p. ex. des capteurs pH, capteurs de conductivité, relais, etc.

3. Dispositif selon l'une des revendications précédentes, **caractérisé en ce que** le module maître est relié à un bus de terrain (p. ex. HART®, Profibus®, Foundation® Fieldbus®) de la technique d'automatisation des process.

4. Dispositif selon l'une des revendications précédentes, **caractérisé en ce que** les modules sont enfichables en piles et, dans le cas de modules voisins, l'entrée d'adresse et la sortie d'adresse sont reliées ensemble.

5. Dispositif selon l'une des revendications précédentes, **caractérisé en ce que** le dispositif sert de transmetteur dans la technique d'automatisation des process.
